Europäisches Patentamt

European Patent Office

Office européen des brevets

(11) Numéro de publication: **0 438 952 A1**

# (12) DEMANDE DE BREVET EUROPEEN

(21) Numéro de dépôt: **90440128.8**

(22) Date de dépôt: **28.12.90**

(51) Int. Cl.⁵: **B23B 31/26**

(30) Priorité: **23.01.90 FR 9000901**

(43) Date de publication de la demande:
**31.07.91 Bulletin 91/31**

(84) Etats contractants désignés:
**AT BE CH DE DK ES GB GR IT LI LU NL SE**

(71) Demandeur: **EMILE PFALZGRAF "EPB", S.A.**
**8b, rue de Neuwiller**

**F-67330 Bouxwiller(FR)**

(72) Inventeur: **Pfalzgraf, Emile**
**7, rue de Neuwiller**
**F-67330 Bouxwiller(FR)**

(74) Mandataire: **Nuss, Pierre et al**
**10, rue Jacques Kablé**
**F-67000 Strasbourg(FR)**

(54) Dispositif de montage à queue conique, en particulier au cône 7/24ème, à application cône et face pour attachements, porte-outils et outils.

㉗ La présente invention concerne un dispositif de montage à queue conique, en particulier au cône 7/24ème, à application cône et face pour attachements, porte-outils et outils, essentiellement constitué par un cône (1) de montage dans une broche (2), par une partie avant (3) centrée dans le cône (1) et munie d'une collerette (4) d'application par sa face arrière contre la face avant de la broche (2), et par une tirette (5) d' assemblage du cône (1) et de la partie avant (3) au moyen d'une pièce intermédiaire filetée (6), sur laquelle s'appuie un ensemble élastique (7) formé de rondelles Belleville destiné à appliquer le cône (1) dans la broche (2) en position de verrouillage et monté en compression entre ledit cône (1) et la partie avant (3), caractérisé en ce qu'il est pourvu d'un dispositif (8) de verrouillage de la position mutuelle du cône (1) et de la partie avant (3), en position de montage dans la broche (2) avec application de la collerette (4) contre la face de ladite broche (2), par serrage d'au moins deux billes (9) entre lesdits cône (1) et partie avant (3).

Fig-1

## DISPOSITIF DE MONTAGE À QUEUE CONIQUE, EN PARTICULIER AU CÔNE 7/24ÈME, À APPLICATION CÔNE ET FACE POUR ATTACHEMENTS, PORTE-OUTILS ET OUTILS

La présente invention concerne le domaine des accessoires de machines-outils, à commande numérique, centres d'usinage, cellules et ateliers flexibles, et a pour objet un dispositif de montage à queue conique, en particulier au cône 7/24ème, à application cône et face pour attachements, porte-outils et outils.

Actuellement, la fixation ou le montage d'un attachement d'outils ou d'outillages dans les broches de machines à fraiser, à aléser, à commande numérique, de centres d'usinage ou de cellules et d'ateliers flexibles, est généralement réalisée au moyen de queues conique, dont la conicité la plus courante est de 7/24ème. Ces montage et fixation étaient jusqu'à ce jour satisfaisants et le sont encore actuellement pour certaines opérations.

L'avènement des centres d'usinage au cône 7/24ème, présentant la plupart du temps un arrière tronqué et une collerette spéciale pour un changement automatique des outils, a entraîné une modification du cône 7/24ème classique avec collerette simple et filetage arrière pour la fixation par tirant fileté.

La plupart des broches de machines construites actuellement sont prévues pour le montage d'outils présentant des cônes 7/24ème et des collerettes correspondant aux normes usuelles, seules subsistant encore quelques machines avec des collerettes bien spécifiques à certains constructeurs.

Le type de fixation connu précité est encore usuel et satisfaisant pour certaines applications, mais, du fait de l'importante augmentation de puissance et de performance des machines et centres d'usinage, ainsi que des développements considérables réalisés dans les plaquettes et outils coupants, la fixation des cônes dans les broches n'est plus adaptée aux progrès réalisés par les machines et aux performances des outils et constitue donc un handicap important, la puissance développée par les machines et les forces résultantes pouvant être encaissées par les outils n'étant pas transmissibles au niveau du cône.

En effet, le point critique et la faiblesse des fixations actuelles se situent le plus souvent à la sortie de broche, qui est un point affaiblissant pour tous les porte-outils ou outils, ces derniers devant respecter un diamètre spécifique de l'outil, qui est le grand diamètre de l'extrémité du cône relié par une portion cylindrique de faible longueur à la collerette. Le même problème se pose également, mais de façon moins cruciale, pour la fixation d'outils au cône 7/24ème sur des tours.

Par ailleurs, il a été proposé de réaliser la fixation d'outils au moyen d'une queue cylindrique avec application contre la face avant de la broche. Ce mode de réalisation permet, certes, de résoudre le problème du contact parfait entre les surfaces, mais nécessite une modification des broches des machines. En outre, le poids de l'outil, important dans certains cas, risque de modifier son alignement par rapport à l'axe de la broche et le positionnement du changeur d'outils doit s'effectuer dans des tolérances extrêmement serrées en tous sens, afin de permettre un alignement parfait de l'axe de la broche et du porte-outils.

Il a également été proposé, dans le cas où de hautes performances devaient être réalisées, pour obtenir une application simultanée du cône et de la face de la broche, d'exécuter, au moyen de gabarits spécifiques à chaque broche, des cônes standards monoblocs. Un tel mode de réalisation entraîne, cependant, des prix de revient extrêmement élevés et nécessite des tolérances de fabrication qui ne peuvent être tenues pour une production en série. En outre, les outils ainsi obtenus sont absolument spécifiques à une broche donnée et ne peuvent en aucun cas être interchangeables avec des outils affectés à d'autres broches donc à d'autres machines. Ce mode de réalisation est donc uniquement valable pour répondre à des problèmes spécifiques.

Par ailleurs, il a également été proposé un dispositif de montage à queue conique, en particulier au cône 7/24ème, à application cône et face pour atachements, porte-outils et outils, qui est essentiellement constitué par un cône d'introduction dans la broche, par une partie avant centrée dans le cône et pourvue de la collerette d'application contre la face de la broche, par une tirette d'assemblage du cône et de la partie avant, par un ensemble élastique de pression du cône dans la broche, monté en compression entre le cône et la partie avant, et par un moyen de réglage dudit ensemble de pression.

Il a également été proposé, différents dispositifs pour pallier le serrage insuffisant et le décollement de la face lors de l'utilisation de certains dispositifs soumis à de très grands efforts de couple. Ces dispositifs présentent tous un moyen de serrage supplémentaire ou un moyen destiné à éliminer tout jeu de tolérances d'assemblage entre le cône et la partie avant, afin de pallier les inconvénients précités, ce moyen étant réalisé sous forme de bagues à billes, de pièces de serrage, de moyens élastiques déformables ou d'un système à baïonnette devant verrouiller les deux pièces principales cône et partie avant constituant les différents dispositifs. Cependant, du fait que ces systèmes présentent une pente unique et sont toujours tributaires de la faiblesse du serreur de la machine, les résultats obtenus ne sont toujours pas satisfaisants pour absorber les puissances des machines et le progrès des fraises et outils coupants.

En outre, il a été proposé des systèmes hydrauliques fonctionnant par gonflement de matière, afin de supprimer les jeux d'assemblage entre le cône et la partie avant. Toutefois, ces systèmes ne permettent non plus d'obtenir les résultats souhaités.

La présente invention a pour but de pallier ces inconvénients.

Elle a, en effet, pour objet un dispositif de montage à queue conique, en particulier au cône 7/24ème, à application cône et face pour attachements, porte-outils et outils, essentiellement constitué par un cône de montage dans une broche, par une partie avant centrée dans le cône et munie d'une collerette d'application par sa face arrière contre la face avant de la broche, et par une tirette d'assemblage du cône et de la partie avant au moyen d'une pièce intermédiaire filetée, sur laquelle s'appuie un ensemble élastique formé de rondelles Belleville destiné à appliquer le cône dans la broche en position de verrouillage et monté en compression entre ledit cône et la partie avant, caractérisé en ce qu'il est pourvu d'un dispositif de verrouillage de la position mutuelle du cône et de la partie avant, en position de montage dans la broche avec application de la collerette contre la face de ladite broche, par serrage d'au moins deux billes entre lesdits cône et partie avant.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue en élévation latérale et en coupe d'un dispositif conforme à l'invention ;
la figure 2 est une vue analogue à celle de la figure I d'une variante de réalisation de la partie avant ;
la figure 3 est une vue analogue à celle de la figure 2 d'une autre variante de réalisation de la partie avant ;
les figures 4 et 5 sont respectivement des vues en élévation frontale et latérale et en coupe d'une pièce de verrouillage ;
les figures 6, 8, 10 et respectivement 7, 9, 11 sont des vues analogues à celles des figures 4 et respectivement 5 d'autres variantes de réalisation de la pièce de verrouillage ;
les figures 12 et 13 sont des vues en élévation latérale de butées de réglage de pression ;
la figure 14 est une vue en élévation latérale d'une pièce de montage de l'ensemble du dispositif, et
la figure 15 est une vue en élévation latérale de la tirette.

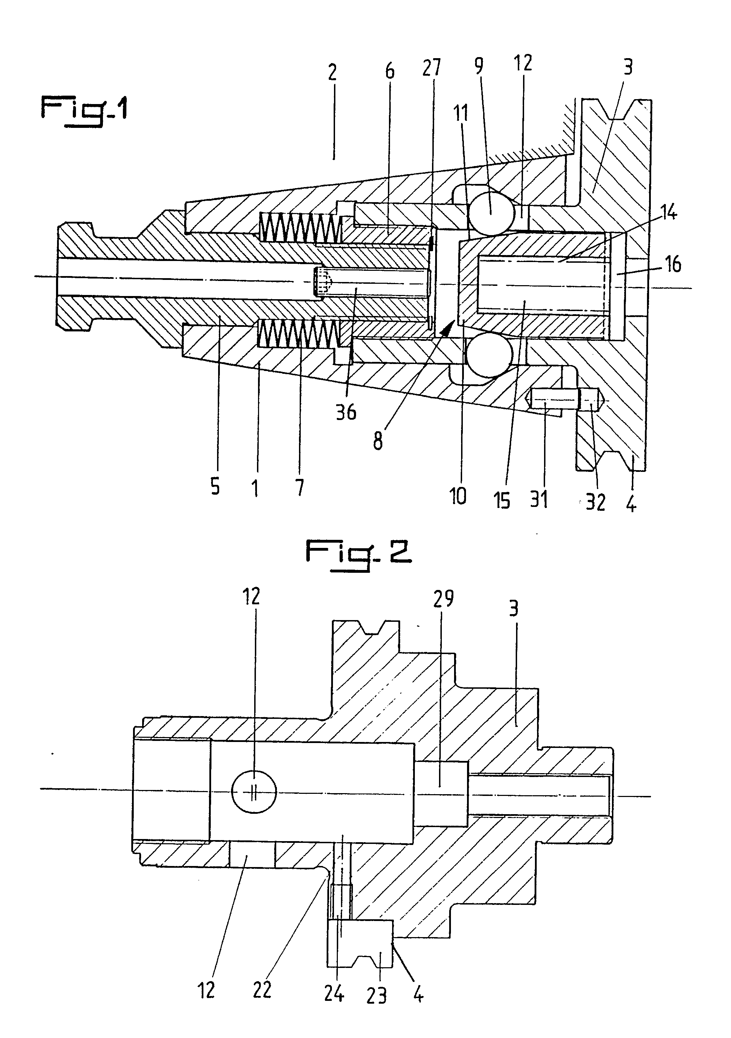

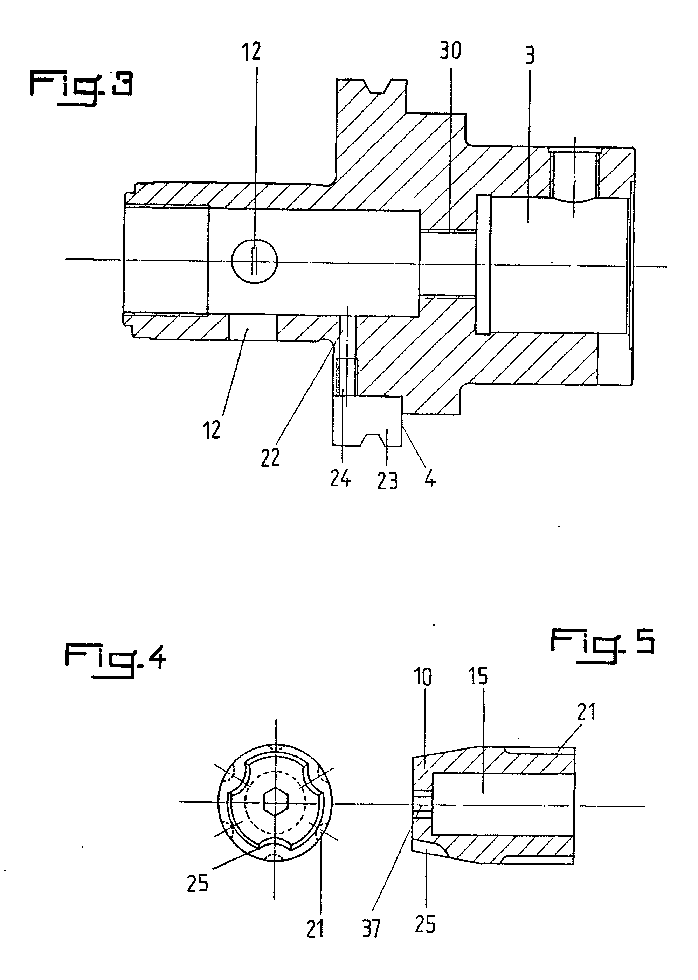

Conformément à l'invention, et comme le montre plus particuièrement, à titre d'exemple, la figure 1 des dessins annexés, le dispositif de montage à queue conique, en particulier au cône 7/24ème, à application cône et face pour attachements, porte-outils et outils, essentiellement constitué par un cône 1 de montage dans une broche 2, par une partie avant 3 centrée dans le cône 1 et munie d'une collerette 4 d'application par sa face arrière contre la face avant de la broche 2, et par une tirette 5 d'assemblage du cône 1 et de la partie avant 3 au moyen d'une pièce intermédiaire filetée 6, sur laquelle s'appuie un ensemble élastique 7 formé de rondelles Belleville destiné à appliquer le cône 1 dans la broche 2 en position de verrouillage et monté en compression entre ledit cône 1 et la partie avant 3, caractérisé en ce qu'il est pourvu d'un dispositif 8 de verrouillage de la position mutuelle du cône 1 et de la partie avant 3, en position de montage dans la broche 2 avec application de la collerette 4 contre la face de ladite broche 2, par serrage d'au moins deux billes 9 entre lesdits cône 1 et partie avant 3.

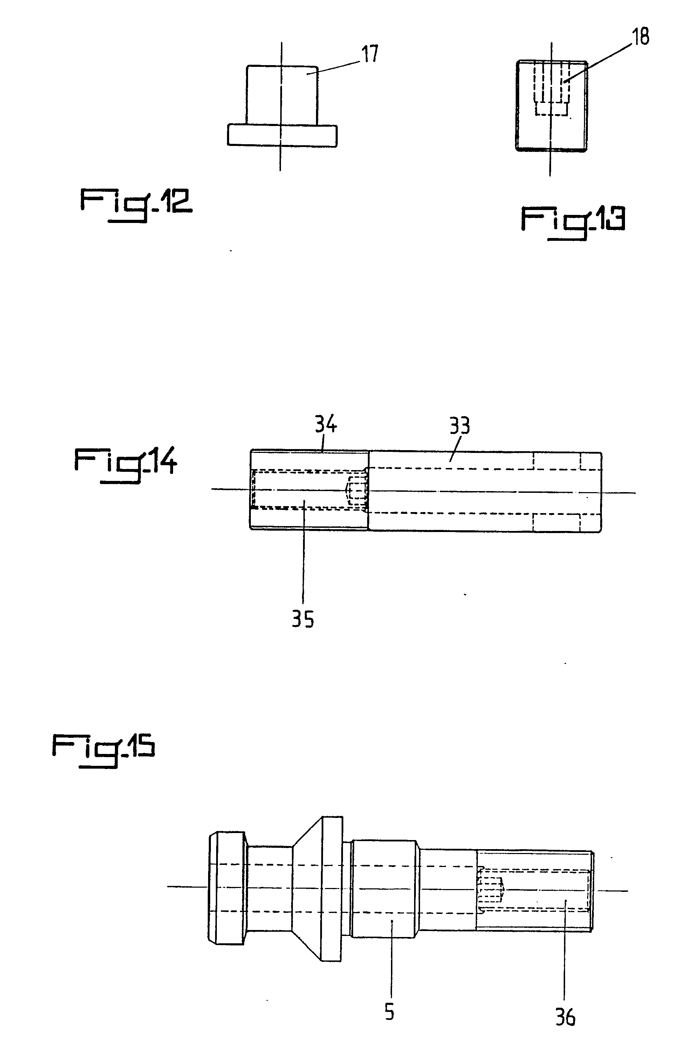

Le dispositif 8 de verrouillage de la position mutuelle du cône 1 et de la partie avant 3 est avantageusement constitué par une pièce de verrouillage cylindrique 10 logée dans la partie avant 3, tournée vers la tirette 5 et présentant une partie tronconique 11 coopérant avec au moins deux billes 9, de préférence avec trois billes 9, du côté tourné vers la tirette 5, lesdites billes 9 étant positionnées à intervalles réguliers dans des lumières 12 de la partie avant 3 et coopérant avec des logements correspondants 13 ou une gorge circulaire correspondante (non représentée) du cône 1, ladite pièce 10 étant chargée par au moins un ressort 14 disposé dans au moins un logement 15 de sa partie arrière et maintenu dans ledit logement au moyen d'un couvercle de fermeture 16 (figure 1) ou d'une butée 17 ou 18 (figures 12 et 13) de réglage de pression du ou des ressorts.

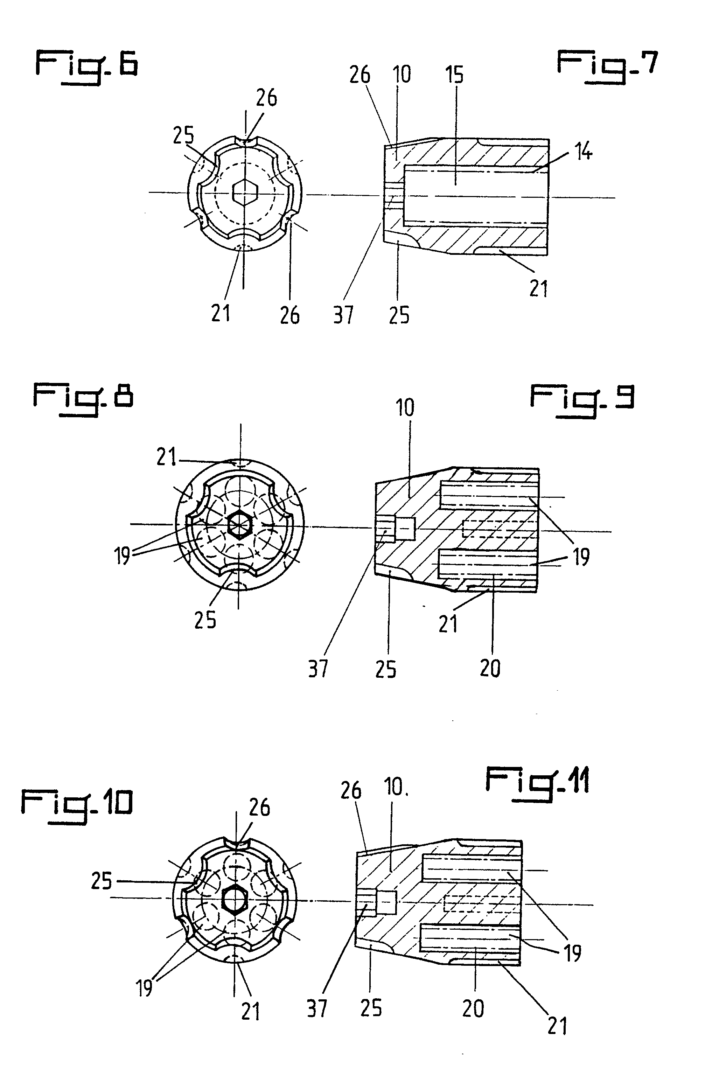

Le nombre de billes 9 n'est pas immuable et il est possible de prévoir plus de trois billes, les lumières 12 et les logements 13 correspondants étant alors au même nombre. Ainsi, selon une autre caractéristique de l'invention, les billes 9 peuvent être prévues en grand nombre et coopérer avec un nombre correspondant de logements 13 ou avec une gorge circulaire du cône 1. Ces lumières 12 sont mieux visibles sur les figures 2 et 3 des dessins annexés, qui représentent des variantes de réalisation de la partie avant 3, qui peut également comporter, au lieu d'un seul diamètre de centrage dans le cône 1, comme représenté aux figures 1 à 3, deux diamètres de centrage ou plus, le plus grand diamètre étant toujours situé vers la collerette 4.

La pièce de verrouillage 10 est pourvue d'un logement unique 15 (figures 4 à 7) de réception d'un ressort unique 14 ou de plusieurs logements 19 disposés en barrillet (figures 8 à 11) de réception de plusieurs ressorts 20.

Cette pièce de verrouillage 10 est munie, en outre, d'une part, sur sa partie cylindrique, à intervalles réguliers, de préférence à 60°, de rainures longitudinales d'indexage 21 destinées à coopérer avec une bille (non représentée) logée dans un perçage radial 22 de la partie avant 3, au niveau de la collerette 4 et au milieu de la rainure 23 de cette dernière et chargée par un ressort (non représenté) dont la tension est réglée au moyen d'une vis se logeant dans un filetage d'extrémité 24 du perçage 22 (figures 2 et 3) et, d'autre part, sur sa partie tronconique 11, à intervalles réguliers, de préférence à 120°, d'évidements 25 de dégagement des billes 9 lors du montage du dispositif (figures 4 à 11).

Selon une variante de réalisation de l'invention, représentée aux figures 6, 7, 10 et 11, la partie tronconique 11 de la pièce de verrouillage l0 peut également être pourvue, à intervalles réguliers, de préférence entre les évidements 25, de rainures longitudinales 26 à fond sphérique, dont le rayon de courbure est égal au rayon des billes 9. Ces rainures 26 permettent une application plus importante des billes 9 sur les pièces 10, lors du'verrouillage de la position mutuelle du cône 1 et de la partie avant 3, que dans le mode de réalisation suivant les figures 4, 5, 8 et 9. En effet, dans le premier cas, l'application des billes s'effectue suivant un arc de cercle, alors que dans l'autre cas, elle est ponctuelle.

Conformément à une autre caractéristique de l'invention, la pièce intermédiaire filetée 6 est avantageusement pourvue, à l'extrémité de son logement interne tourné vers la pièce de verrouillage 10, d'une butée d'arrêt 27 pour la tirette 5, sous forme d'une bague élastique pénétrant dans une gorge circulaire prévue à l'extrémité dudit logement.

Les butées 17 et 18 de réglage de pression du ressort unique 14 ou des ressorts multiples 20 sont destinées à être introduites, soit l'une, 17, dans un logement 28 de la partie avant 3 avec possibilité de réglage en déplacement au moyen d'une vis coopérant avec un taraudage 29 de cette partie avant 3, prévu du côté opposé au logement de la pièce 10 (figure 2), soit l'autre, 18, dans un taraudage 30 de la partie avant 3, prolongeant le logement de la pièce 10 du côté opposé à la tirette 5 (figure 3). Dans ce dernier cas, le réglage de la pression peut être effectué directement au moyen de la butée 18 par un vissage ou un dévissage correspondant dans le taraudage 30.

Selon une autre caractéristique de l'invention, le cône 1 est pourvu sur sa face tournée vers la partie avant 3 d'un ergot 31 destiné à coopérer avec un logement de forme correspondante 32 de la collerette 4 de la partie avant 3 en vue d'une indexation mutuelle permettant l'alignement des fenêtres 12 de la partie 3 et des logements correspondants 13 du cône 1. Une telle indexation est absolument nécessaire afin de permettre un assemblage rapide du cône 1 et de la partie 3.

En outre, pour favoriser le montage de la partie avant 3 avec le dispositif de verrouillage 8 dans le cône 1, le dispositif conforme à l'invention est muni d'une pièce de montage 33 (figure 14) pourvue à une extrémité d'un filetage 34 destiné à coopérer avec le taraudage de la pièce intermédiaire filetée 6 et logeant une vis 35 d'actionnement de la pièce de verrouillage 10. La mise en oeuvre de cette pièce 33 sera expliquée ci-après.

Enfin, selon une autre caractéristique de l'invention, la tirette 5 est une tirette creuse pourvue à son extrémité vissée dans la pièce filetée 6 d'une vis de manoeuvre intérieure 36 (figures 1 et 15). Une telle vis 36 est plus particulièrement destinée à permettre un déverrouillage de l'assemblage entre le cône 1 et la partie avant 3.

Par ailleurs, comme le montre les figures 4 à 11, la pièce de verrouillage 10 est avantageusement munie dans sa face tournée vers la tirette 5 d'un évidement polygonal 37 de manoeuvre. Un tel évidement est destiné à l'insertion d'une clé de forme correspondante permettant la rotation de la pièce 10 en vue de son indexage dans une position d'actionnement des billes 9.

Enfin, conformément à une variante de réalisation de l'invention, non représentée aux dessins annexés, il est également possible, dans certains cas, de supprimer la pièce intermédiaire 6, la tirette 5 présentant alors un diamètre plus important et étant vissée directement dans l'alésage de la pièce 3, dont le diamètre est alors plus faible, l'ensemble 8 présentant un diamètre extérieur correspondant à celui de l'alésage de la pièce 3 et les billes 9 ayant un diamètre plus important.

Le dispositif conforme à l'invention est assemblé de la manière suivante :

Une pièce avant 3 selon la figure 2 est pourvue d'une butée 17 selon la figure 12 et un ressort central 14 est disposé dans la pièce 10 selon les figures 4 à 7, l'ensemble étant introduit dans l'alésage de la pièce 3 par son côté pénétrant dans le cône 1 et la pièce 10 est présentée de telle manière que la bille logée dans le perçage radial 22 coopère avec l'une des rainures longitudinales d'indexage 21, en présentant les évidements 25 de dégagement des billes 9 en face des lumières 12 de la partie 3. Puis, la pièce 6 est vissée et bloquée dans la partie avant 3 et la pièce de montage 33 est vissée dans la pièce 6, sa vis 35 étant ensuite déplacée en direction de la pièce 10 afin de repousser cette dernière au fond de son logement dans la partie avant 3 contre la butée 17.

L'ensemble élastique 7 formé par les rondelles Belleville est alors introduit dans le cône 1 et les billes 9 sont introduites dans les lumières 12 de la partie 3, cette dernière étant introduite ensuite dans le cône 1 avec indexage par rapport à ce dernier par l'intermédiaire de son ergot 31 coopérant avec le logement 32 correspondant prévu dans la collerette 4 de la partie 3, un jeu de fonctionnement, tenant compte des tolérances en longueur des cônes et des broches existants et d'une marge supplémentaire de serrage, étant maintenu entre la face avant du cône 1 et la face arrière de la collerette 4.

La pièce de montage 33 peut alors être retirée et une clé peut être introduite dans l'évidement polygonal 37 de la pièce 10 afin d'effectuer une rotation de cette dernière destinée à amener la bille d'indexage à s'enclencher dans la rainure 21 suivante et ainsi à dégager les billes 9 des évidements 25 correspondants de la partie tronconique 11. Ensuite, la tirette 5 peut être vissée dans la pièce 6 jusqu' à arriver contre la butée d'arrêt 27 de cette dernière, réalisant ainsi un serrage préalable entre le cône 1 et la partie avant 3 avec maintien d'un jeu entre la face du cône 1 et celle de la partie avant 3, ce jeu étant nécessaire à un bon fonctionnement lors de l'application par le serreur de la machine de la face arrière de la collerette 4 contre la face de la broche 2.

Le dispositif de montage peut alors être introduit manuellement ou automatiquement dans la broche de la machine, son cône 1 étant appliqué, lors de la phase initiales de serrage, dans le cône de la broche 2 au moyen de la tirette 5 actionnée par le serreur, un actionnement complémentaire ayant pour effet d'appliquer la face arrière de la collerette 4 contre la face avant de la broche 2. Au cours de cette action de serrage, les billes 9 sont serrées entre plusieurs éléments présentant des inclinaisons angulaires différentes, de sorte qu'est réalisé, par la pièce 10 dont la partie tronconique 11 présente la plus faible pente, un verrouillage en position de service de ces pièces.

Ainsi, après réalisation du réglage dans la broche de la machine et application contre la face avant de la broche, les principaux éléments constitutifs du dispositif se comportent comme si le dispositif était réalisé en une pièce unique, le verrouillage des pièces entre elles étant extrêmement efficace. Le dispositif peut alors resté verrouillé définitivement pour un usage sur la broche ayant servi à son réglage, chaque remontage sur ladite broche ayant pour effet une application dans le cône et contre la face.

Dans le cas où le dispositif doit être utilisé sur une autre machine, il suffit de déverrouiller l'assemblage entre le cône 1 et la partie 3 en exerçant une pression sur la pièce 10 au moyen de la vis 36 logée dans la tirette 5 afin de libérer les billes 9. Un montage dans une autre broche suivi d'un serrage dans cette dernière permettra un réglage automatique du dispositif dans ladite broche.

Le fonctionnement du dispositif a été décrit avec utilisation d'une pièce 10 muni d'un logement 15 unique en coopération avec une partie avant suivant la figure 2. Toutefois, d'autres combinaisons de pièces 10 et de parties avant 3 sont possibles sans altérer le fonctionnement du dispositif.

Grâce à l'invention, il est possible de réaliser un dispositif de montage d'attachements, de porte-outils et d'outils à application cône et face, notamment pour centres d'usinage et de tournage avec changeurs automatiques ou manuels d'outils à queue conique, en particulier au cône 7/24ème, permettant une application cône et face et une persistance d'un réglage donné pour une utilisation sur une machine donnée, tout en restant facilement adaptable à une broche d'une autre machine.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif de montage à queue conique, en particulier au cône 7/24ème, à application cône et face pour attachements, porte-outils et outils, essentiellement constitué par un cône (1) de montage dans une broche (2), par une partie avant (3) centrée dans le cône (1) et munie d'une collerette (4) d'application par sa face arrière contre la face avant de la broche (2), et par une tirette (5) d'assemblage du cône (1) et de la partie avant (3) au moyen d'une pièce intermédiaire filetée (6), sur laquelle s'appuie un ensemble élastique (7) formé de rondelles Belleville destiné à appliquer le cône (1) dans la broche (2) en position de verrouillage et monté en compression entre ledit cône (1) et la partie avant (3), caractérisé en ce qu'il est pourvu d'un dispositif (8) de verrouillage de la position mutuelle du cône (1) et de la partie avant (3), en position de montage dans la broche (2) avec application de la collerette (4) contre la face de ladite broche (2), par serrage d'au moins deux billes (9) entre lesdits cône

(1) et partie avant (3).

2. Dispositif, suivant la revendication 1, caractérisé en ce que le dispositif (8) de verrouillage de la position mutuelle du cône (1) et de la partie avant (3) est avantageusement constitué par une pièce de verrouillage cylindrique (10) logée dans la partie avant (3), tournée vers la tirette (5) et présentant une partie tronconique (11) coopérant avec au moins deux billes (9), de préférence avec trois billes (9), du côté tourné vers la tirette (5), lesdites billes (9) étant positionnées à intervalles réguliers dans des lumières (12) de la partie avant (3) et coopérant avec des logements correspondants (13) ou une gorge circulaire correspondante du cône (1), ladite pièce (10) étant chargée par au moins un ressort (14) disposé dans au moins un logement (15) de sa partie arrière et maintenu dans ledit logement au moyen d'un couvercle de fermeture (16) ou d'une butée (17 ou 18) de réglage de pression du ou des ressorts.

3. Dispositif, suivant l'une quelconque des revendications 1 et 2, caractérisé en ce que les billes (9) sont prévues en grand nombre et coopèrent avec un nombre correspondant de logements (13) ou avec une gorge circulaire du cône (1).

4. Dispositif, suivant la revendication 2, caractérisé en ce que la pièce de verrouillage (10) est pourvue d'un logement unique (15) de réception d'un ressort unique (14) ou de plusieurs logements (19) disposés en barillet de réception de plusieurs ressorts (20).

5. Dispositif, suivant l'une quelconque des revendications 2 et 4, caractérisé en ce que la pièce de verrouillage (10) est munie, en outre, d'une part, sur sa partie cylindrique, à intervalles réguliers, de préférence à 60°, de rainures longitudinales d'indexage (21) destinées à coopérer avec une bille logée dans un perçage radial (22) de la partie avant (3), au niveau de la collerette (4) et au milieu de la rainure (23) de cette dernière et chargée par un ressort dont la tension est réglée au moyen d'une vis se logeant dans un filetage d'extrémité (24) du perçage (22) et, d'autre part, sur sa partie tronconique (11), à intervalles réguliers, de préférence à 120°, d'évidements (25) de dégagement des billes (9) lors du montage du dispositif.

6. Dispositif, suivant l'une quelconque des revendications 2 à 5, caractérisé en ce que la partie tronconique (11) de la pièce de verrouillage (10) est pourvue, à intervalles réguliers, de préférence entre les évidements (25), de rainures longitudinales (26) à fond sphérique, dont le rayon de courbure est égal au rayon des billes (9).

7. Dispositif, suivant la revendication 1, caractérisé en ce que la pièce intermédiaire filetée (6) est avantageusement pourvue, à l'extrémité de son logement interne tourné vers la pièce de verrouillage (10), d'une butée d'arrêt (27) pour la tirette (5), sous forme d'une bague élastique pénétrant dans une gorge circulaire prévue à l'extrémité dudit logement.

8. Dispositif, suivant la revendication 2, caractérisé en ce que les butées (17 et 18) de réglage de pression du ressort unique (14) ou des ressorts multiples (20) sont destinées à être introduites, soit l'une (17) dans un logement (28) de la partie avant (3) avec possibilité de réglage en déplacement au moyen d'une vis coopérant avec un taraudage (29) de cette partie avant (3), prévu du côté opposé au logement de la pièce (10), soit l'autre (18) dans un taraudage (30) de la partie avant (3), prolongeant le logement de la pièce (10) du côté opposé à la tirette (5).

9. Dispositif, suivant la revendication 1, caractérisé en ce que le cône (1) est pourvu sur sa face tournée vers la partie avant (3) d'un ergot (31) destiné à coopérer avec un logement de forme correspondante (32) de la collerette (4) de la partie avant (3) en vue d'une indexation mutuelle permettant l'alignement des fenêtres (12) de la partie (3) et des logements correspondants (13) du cône (1).

10. Dispositif, suivant l'une quelconque des revendications 1 à 9, caractérisé en ce que, pour favoriser le montage de la partie avant (3) avec le dispositif de verrouillage (8) dans le cône (1), le dispositif conforme à l'invention est muni d'une pièce de montage (33) pourvue à une extrémité d'un filetage (34) destiné à coopérer avec le taraudage de la pièce intermédiaire filetée (6) et logeant une vis (35) d'actionnement de la pièce de verrouillage (10).

11. Dispositif, suivant l'une quelconque des revendications 1, 7 et 8, caractérisé en ce que la tirette (5) est une tirette creuse pourvue à son extrémité vissée dans la pièce filetée (6) d'une vis de manoeuvre intérieure (36).

12. Dispositif, suivant l'une quelconque des revendications 2 à 8 et 10, caractérisé en ce que la pièce de verrouillage (10) est avantageusement munie dans sa face tournée vers la tirette (5) d'un évidement polygonal (37) de manoeuvre.

13. Dispositif, suivant l'une quelconque des revendications 1 et 2, caractérisé en ce que la pièce intermédiaire (6) est supprimée, la tirette (5) présentant un diamètre plus important et étant vissée directement dans l'alésage de la pièce (3), dont le diamètre est plus faible, l'ensemble (8) présentant un diamètre extérieur correspondant à celui de l'alésage de la pièce (3) et les billes (9) ayant un diamètre plus important.

Fig-1

Fig- 2

Fig.3

12    30    3

Fig.4    Fig.5

10    15

21

25

21    37    25

Fig.6

Fig.7

Fig.8

Fig.9

Fig.10

Fig.11

17

Fig.12

18

Fig.13

Fig.14

34    33

35

Fig.15

5    36

Office européen
des brevets

**RAPPORT DE RECHERCHE
EUROPEENNE**

Numéro de la demande

**EP 90 44 0128**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CI.5) |
|---|---|---|---|
| A | EP-A-0 340 369 (PFALZGRAF)<br>* revendications 1, 2; figure 1 *<br>– – – | 1 | B 23 B<br>31/26 |
| A | EP-A-0 317 682 (PFALZGRAF)<br>* revendication 1; figures 1, 8 *<br>– – – | 1 | |
| A | EP-A-0 316 826 (BENZ)<br>* revendications 1, 7; figures 1, 3, 4 *<br>– – – | 1 | |
| A | DE-U-8 437 207 (VALERON)<br>* revendication 1; figure 1 *<br>– – – | 1 | |
| A | DE-A-2 759 007 (EX-CELL-O)<br>* revendications 1, 8-13 *<br>– – – | 1 | |
| A | DE-A-3 340 320 (SANDVIK KOSTA)<br>* revendication 1; figures 1-4 *<br>– – – – – | 9 | |

|  | DOMAINES TECHNIQUES RECHERCHES (Int. CI.5) |
|---|---|
|  | B 23 B<br>B 23 C<br>B 23 Q |

Le présent rapport de recherche a été établi pour toutes les revendications

| Lieu de la recherche | Date d'achèvement de la recherche | Examinateur |
|---|---|---|
| Berlin | 15 avril 91 | CUNY J M J C |